# EUROPÄISCHE PATENTSCHRIFT

(11) **EP 1 675 928 B1**
(45) Veröffentlichungstag und Bekanntmachung des Hinweises auf die Patenterteilung: **30.04.2008**
(21) Anmeldenummer: 04790469.3
(22) Anmeldetag: 15.10.2004
(51) Int. Cl.: C09K 8/04, C09K 8/34

(54) **EMULGATOREN FÜR BOHRSPÜLMITTEL**
EMULSIFIERS FOR DRILLING FLUIDS
EMULSIFIANTS POUR FLUIDES DE FORAGE

(30) Priorität: 24.10.2003 DE 10349808
(43) Veröffentlichungstag der Anmeldung: 05.07.2006
(73) Patentinhaber: Cognis Oleochemicals GmbH, 40589 Düsseldorf (DE)
(72) Erfinder: MÜLLER, Heinz, 40789 Monheim (DE); HERZOG, Nadja, 41352 Korschenbroich (DE); BEHLER, Ansgar, 46240 Bottrop (DE); HARTMANN, Jens, MST 13 Bidnija (MT)
(74) Vertreter: Herzog, Martin
(86) Internationale Anmeldenummer: PCT/EP2004/011624
(87) Internationale Veröffentlichungsnummer: WO 2005/042665

(56) Entgegenhaltungen:
- WO-A-02/090369
- DE-C1- 10 122 255
- US-A1- 2004 136 939

## Beschreibung

Die vorliegende Anmeldung betrifft Additive für Bohrlochbehandlungsmittel, insbesondere Emulgatoren für wässerige Emulsionsbohrspülungen, sowie Bohrspülsysteme, die derartige Emulgatoren enthalten.

Flüssige Spülsysteme zur Niederbringung von Gesteinsbohrungen unter Aufbringung des abgelösten Bohrkleins sind bekanntlich beschränkt eingedickt fließfähige Systeme auf Wasser- oder auf Ölbasis. Die zuletzt genannten Systeme auf Ölbasis finden in der Praxis zunehmend Bedeutung und werden insbesondere im Bereich der Off-Shore-Bohrung eingesetzt. Bohrspülungen auf Ölbasis werden im allgemeinen als sogenannte Invert-Emulsionsschlämme eingesetzt, die aus einem 3-Phasen-System bestehen: Öl, Wasser und feinteilige Feststoffe. Es handelt sich dabei um Zubereitungen vom Typ der W/O-Emulsionen, d.h. die wässrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorensysteme, Beschwerungsmittel, fluid-loss-Additive, Viskositätsregler sowie ggf. eine Alkalireserve.

Wesentliches Kriterium für die Beurteilung der praktischen Anwendbarkeit derartiger Invert-Bohrspülsysteme sind die rheologischen Kenndaten. In für die Praxis geeigneten Bohrspülsystemen müssen bestimmte Viskositätswerte eingehalten werden, insbesondere muss eine ungesteuerte Verdickung und damit Viskositätserhöhung der Bohrspülung unbedingt verhindert werden, da ansonsten das Bohrgestänge während des Bohrprozesses feststecken kann (sogenanntes "Stuck-Pipe") und ein derartiger Betriebszustand nur durch zeit- und kostenaufwendige Maßnahmen behoben werden kann. In der Praxis werden daher den Bohrspülsystemen vor und während der Bohrung geeignete Verdünner zugesetzt. Im Stand der Technik sind hier vorzugsweise anionische Tenside aus der Gruppe der Fettalkoholsulfate, der Fettalkoholethersulfate und der Alkylbenzolsulfonate bekannt. Des Weiteren muss beachtet werden, dass die Bohrspülung, die ins Erdreich gepumpt wird, sich aufwärmt, abhängig von der Täufe z.B. auf Werte von 150 bis 250 °F (66 bzw. 121 °C), bei sehr tiefen Bohrungen bis 350 °F (178°C), wobei es aber nicht immer gewünscht ist, dass die Rheologie im hohen. Temperaturbereich ebenfalls beeinflusst wird. Vielmehr ist häufig nur eine selektive Beeinflussung der Rheologie im kritischen niedrigen Temperaturbereich gewünscht. Außerdem sollten alle Additive und Hilfsmittel, die in Bohrspülsystemen off-shore und on-shore zum Einsatz kommen hohen Anforderungen in Bezug auf die biologische Abbaubarkeit sowie die Toxizität erfüllen. Auch stellen die Umgebungsbedingungen bei Erdreicherbohrungen, wie hohe Temperatur, hoher Druck, durch Einbruch sauer Gase erfolgende pH-Wert-Änderungen etc. hohe Anforderungen an die Auswahl möglicher Komponenten und Additive.

Sofern, wie heute häufig eingesetzt, wässerige Bohrspülsysteme in Emulsionsform Verwendung finden, ist die Mitverwendung von Emulgatoren zwingend. Dem Fachmann sind eine Vielzahl geeigneter Verbindungen bekannt, wie beispielsweise der Offenbarung der EP 0 948 577 zu entnehmen ist, deren technische Lehre auf spezielle, temperaturabhängige Emulsionen eingeschränkt ist. Allerdings sind der Schrift eine Vielzahl dem Fachmann für den Einsatz in Bohrspülungen geeignete Emulgatoren zu entnehmen. Verwiesen wird dazu auf die konkrete Offenbarung der Paragraphen 0066 bis 0076 in der EP 0 948 577 B1. Die Auswahl von Emulgatoren für Bohrlochbehandlungssysteme und insbesondere von Bohrspülungen ist primär darauf gerichtet, solche Substanzen zu finden, die auch unter den extremen Bedingungen des praktischen Einsatzes zu einer maximalen Stabilität der Emulsion führen, d.h. es soll ein Viskositätsanstieg der Bohrspülmittel, insbesondere das Brechen der Emulsion unbedingt verhindert werden. Dies gilt insbesondere bei Emulsionen des Typs Wasser-in-Öl.

Eine wesentliche Aufgabe der Bohrspülung besteht außerdem darin, die durch die Bohrung entstandene Kavität gegenüber dem Einbruch von Flüssigkeiten aus der Formation zu stabilisieren. Dies wird erreicht, indem der Druck der Spülung größer ist als der Druck der Formationsflüssigkeiten. Die Spülung hat daher aber auch die Tendenz, in die Formation einzudringen, wobei allerdings Feststoffe in der Spülung schnelle eine Schicht auf der Oberfläche ("filter cake") der Bohrwand ausbilden, die nur geringe Mengen an Flüssigkeit durchlässt. Die Menge an Flüssigkeit, die so verloren geht soll möglichst gering gehalten werden, so dass die Filtratmenge (gemessen nach API ) eine wesentliches Kriterium für die Qualität eine Bohrspülung darstellt. Es wird daher konstant nach Systemen gesucht, die die Filtratwerte von Spülungssystemen verbessern ohne das ansonsten geforderte Eigenschaftsprofil der Spülung negativ zu beeinflussen.

Es wurde nun gefunden, dass der Einsatz bestimmter Zuckerderivate die gestellte Aufgabe löst.

Gegenstand der vorliegenden Anmeldung ist daher die Verwendung von Tensidmischungen, die hergestellt werden, indem man eine wässrige Lösung aus mindestens einem Alkyl- und/oder Alkenyloligoglycosid in Gegenwart von Alkali mit einer omega-Halogencarbonsäure, deren Salzen oder Ester umsetzt, in Bohrspülmitteln. Zur Herstellung der erfindungsgemäßen Tensidgemische werden Alkyl- und Alkenyloligoglykoside der Formel (I) eingesetzt,

RO-[G]ₚ (I)

in der R für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht. Sie können nach den einschlägigen Verfahren der präparativen organischen Chemie erhalten werden. Die Alkyl- und/oder Alkenyloligoglykoside können sich von Aldosen bzw. Ketosen mit 5 oder 6 Kohlen-stoffatomen, vorzugsweise der Glucose ableiten. Die bevorzugten Alkyl- und/oder Alkenyloligoglykoside sind somit Alkyl- und/oder Alkenyloligoglucoside. Die Indexzahl p in der allgemeinen Formel (I) gibt den Oligomerisierungsgrad (DP), d. h. die Verteilung von Mono- und Oligoglykosiden an und steht für eine Zahl zwischen 1 und 10. Während p in einer gegebenen Verbindung stets ganzzahlig sein muss und hier vor allem die Werte p = 1 bis 6 annehmen kann, ist der Wert p für ein bestimmtes Alkyloligoglykosid eine analytisch ermittelte rechnerische Größe, die meistens eine gebrochene Zahl darstellt. Vorzugs-weise werden Alkyl- und/oder Alkenyloligoglykoside mit einem mittleren Oligomerisierungsgrad p von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt. Der Alkyl- bzw. Alkenylrest R1 kann sich von primären Alkoholen mit 4 bis 11, vor-zugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestem oder im Verlauf der Hydrierung von Aldehyden aus der Roelen'schen Oxosynthese erhalten werden. Bevorzugt sind Alkyloligoglucoside der Kettenlänge C8-C10 (DP = 1 bis 3), die als Vorlauf bei der destillativen Auftrennung von technischem C8-C18-Kokosfettalkohol anfallen und mit einem Anteil von weniger als 6 Gew.-% C12-Alkohol verunreinigt sein können sowie Alkyloligoglucoside auf Basis technischer C9/11-Oxoalkohole (DP = 1 bis 3). Der Alkyl- bzw. Alkenylrest R1 kann sich ferner auch von primären Alkoholen mit 12 bis 22, vorzugsweise 12 bis 18 und insbesondere 12 bis 14 Kohlenstoffatomen ableiten. Typische Beispiele sind Laurylalkohol, My-ristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol, Brassidylalkohol sowie deren technische Gemische, die wie oben beschrieben erhalten werden können. Bevorzugt sind Alkyloligoglucoside auf Basis von gehärtetem C12/14-Kokosalkohol mit einem DP von 1 bis 3. Zur Herstellung der erfindungsgemäßen Tensidgemische werden omega-Halogencarbonsäuren, deren Salze oder Ester eingesetzt. Als omega-Halogencarbonsäuren, deren Salze oder Ester kommen erfindungsgemäß alle dem Fachmann aus der Literatur bekannten Verbindungen diese Typs in Frage. Vorzugsweise wird Kalium- oder Natriummonochloracetat (MCA) eingesetzt.

Das Herstellverfahren und die Mischungen selbst sind Gegenstand der DE 101 22 255 C1, siehe hierzu insbesondere Spalte 2 Absatz 0009 bis Spalte 3 Absatz 0011 sowie der Beispiele 1 und 2 dieser Schrift. Bevorzugt sind dabei solche Mischungen, die APG-Carboxylate im Sinne der DE 101 22 255 C1 enthalten, wobei bei deren Herstellung ein Molverhältnis zwischen APG und der omega-Halogencarbonsäure von 1 : 0,5 bis 1 : 3,5 und insbesondere von 1 : 1 bis 1 : 1,5 eingehalten wird.

Die Tensidmischungen im Sinne der vorliegenden technischen Lehre liegen als wässerige Lösungen vor, die als Hauptbestandteil, d.h. mit mindestens 15 Gew.-% ein Carboxylat des eingesetzten APGs enthalten. Weiterhin findet sich in untergeordneten Mengen, d.h. weniger als 15 Gew.-% vorzugsweise weniger als 12 Gew.-% nicht-umgesetztes APG in den wässerigen Mitteln. Daneben können noch Glykol und Salze wir NaCl in Mengen von jeweils 5 bis 1 Gew.-% enthalten sein. Der Rest der Mittel ist Wasser. Eine typische Zusammensetzung enthält 50 bis 70 Gew.-% Wasser, 15 bis 20 Gew.-% eines APG-Carboxylates im Sinne der DE 101 22 255 C1, zwischen 5 und 15 Gew.-% APG und jeweils 1 bis 5 Gew.-% an Salzen bzw. Glykol.

Die Tensidmischungen werden vorzugsweise als Emulgatoren in Bohrspülungen eingesetzt, wobei die Bohrspülung mind. eine wässrige und eine nicht-wässrige Phase enthalten muss. Dabei ist es besonders bevorzugt, die Tensidmischungen als Emulgatoren in Bohrspülmitteln einzusetzen, die eine Wasser-in-Öl oder eine Öl-in-Wasser Emulsion ausbilden. Ganz besonders bevorzugt ist der Einsatz der Tensidmischungen für sogenannte Invert-Bohrspülungen, bei denen in einer kontinuierlichen Ölphase dispers eine Wasserphase emulgiert ist. Es kann vorteilhaft sei, die Tensidmischungen im Sinne der vorliegenden Erfindung in derartigen Bohrspülsystemen einzusetzen, wobei die Ölphase der Bohrspülungen ausgewählt ist aus Estern von gesättigten oder ungesättigten, verzweigten oder unverzweigten Monocarbonsäuren mit 1 bis 24 C-Atomen und einwertigen linearen oder verzweigten, gesättigten oder ungesättigten Alkoholen mit 1 bis 24 C-Atomen. Weiterhin bevorzugt ist der Einsatz in solchen Bohrspülmitteln, deren Ölphase lineare alpha-Olefine, interne Olefine oder Paraffine enthält. Es kann auch vorteilhaft sein, derartige Ölphasen einzusetzen, die aus Mischungen der oben als bevorzugt beschriebenen Carrierfluids stehen.

Die Bohrspülungen im Sinne der vorliegenden Erfindung sollten die Tensidmischungen vorzugsweise in Mengen von mindesten 0,05 Gew.-%, bezogen auf das Gesamtgewicht der Spülung enthalten. Bevorzugt ist es diese in Mengen von 0,1 bis maximal 25 Gew.-%, vorzugsweise aber 0,1 bis 10 Gew.-% und insbesondere von 0,1 bis 5 Gew.-% bezogen auf das Gewicht der gesamten Bohrspülung einzusetzen, um ihre erfindungsgemäße Wirkung optimal erfüllen zu können. Dabei ist der Bereich von 0,1 bis 1,0 Gew.-% ganz besonders bevorzugt. Bezogen auf das Gewicht der Ölphase alleine sollten vorzugsweise 1 bis 15 Gew.-% der Tensidmischungen Verwendung finden, wobei der Bereich von 1 bis 10 Gew.-% hierbei besonders bevorzugt ein kann.

Der Einsatz der erfindungsgemäßen Tensidmischungen führt zu einer Verbesserung der rheologischen Eigenschaften der Emulsionen, insbesondere in Gegenwart von Seewasser. Auch die Filtrateigenschaften derartiger Bohrspülungen verbessern sich deutlich durch Zusatz der erfindungsgemäßen Tensidmischungen. Ein weiterer positiver Effekt bei der Verwendung der Tensidmischungen in Bohrspülmittel ist darin zu sehen, dass die Bohrspülmittel auch bei der Kontaminierung noch ihre rheologischen Eigenschaften aufrechterhalten und es beispielsweise nicht zu einem nachteiligen Anstieg des Yield-Points kommt. Auch hier zeigt sich der positive Effekt, insbesondere bei mit Feststoffen und/oder Seewasser kontaminierten Invert-Bohrspülsystemen.

Es kann bevorzugt sein, neben den erfindungsgemäßen Tensidmischungen noch freie, gesättigte oder ungesättigte Fettsäuren der allgemeinen Formel R-COOH, in der R für Alkyl- oder Alkenylreste mit 5 bis 21 C-Atomen steht, mit zu verwenden. Dabei sollten diese Fettsäuren vorzugsweise in Mengen von mindesten 0,1, vorzugsweise mindestens 0,3 Gew.-% und vorteilhafterweise im Bereich von 0,5 bis 10 Gew.-%, bezogen auf das Gewicht der Spülung, eingesetzt werden. Ein besonders bevorzugter Bereich liegt bei 1,0 bis 5,0 Gew.-%. Bezogen auf das Gewicht der Ölphase sollten die freien Fettsäuren vorzugsweise in Mengen von 1,5 bis 6 Gew.-% eingesetzt werden. Es ist außerdem bevorzugt, dass die freien Fettsäuren in einem Gewichtsverhältnis von ca. 1 : 1, vorzugsweise 2 : 1 bis maximal 10 : 1 zu den Tensidmischungen eingesetzt werden.

Ein weiterer Gegenstand der vorliegenden Erfindung betrifft im Temperaturbereich von 5 bis 20°C fließ- und pumpfähige Bohrlochbehandlungsmittel, insbesondere Bohrspülungen, entweder auf Basis einer geschlossenen Ölphase, gewünschtenfalls in Abmischung mit einer beschränkten Menge einer dispersen wässrigen Phase (W/O-Invert-Typ) oder auf Basis einer O/W-Emulsion mit disperser Ölphase in der geschlossenen wässrigen Phase, gewünschtenfalls enthaltend gelöste und/oder dispergierte übliche Hilfsstoffe wie Viskositätsbildner, Emulgatoren, Fluid-loss-Additive, Netzmittel, feinteilige Beschwerungsstoffe, Salze, Alkalireserven und/oder Biozide, wobei sie in ihrer Ölphase Verbindungen ausgewählt aus den Klassen
(a) Carbonsäureestern der Formel (II)

   R'-COO-R" (II)

   wobei R' für einen gesättigten oder ungesättigten, linearen oder verzweigten Alkylrest mit 5 bis 23 C-Atomen steht und R" einen Alkylrest mit 1 bis 22 C-Atomen bedeutet, wobei der Rest R" gesättigt oder ungesättigt, linear oder verzweigt sein kann,
(b) linearen oder verzweigte Olefinen mit 8 bis 30 C-Atomen,
(c) wasserunlöslichen symmetrischen oder unsymmetrischen Ether aus einwertigen Alkoholen natürlichen oder synthetischen Ursprungs, wobei die Alkohole 1 bis 24 C-Atome enthalten können,
(d) wasserunlöslichen Alkohole der Formel (III)

   R"'-OH (III)

   wobei R"' für einen gesättigten, ungesättigten, linearen oder verzweigten Alkylrest mit 8 bis 24 C-Atomen steht,
(e) Kohlensäurediestern,
(f) Paraffine,
(g) Acetale

Diese Mittel enthalten, in der geschlossenen Ölphase die Öle der oben aufgeführten Gruppen allein oder in Abmischung untereinander.

Besonders bevorzugt als Ölphase sind die Carbonsäureester der Formel (II) und hier insbesondere solche, die in der europäischen Offenlegungsschrift EP 0 374 672 bzw. EP 0 386 636 beschrieben werden. Besonders bevorzugt ist im Rahmen der erfindungsgemäßen Lehre, die Verbindungen der Formel (I) in solchen Invert-Bohrspülemulsionen einzusetzen, deren Ölphase (A) Ester der Formel (II) enthält, wobei der Rest R' in Formel (II) für einen Alkylrest mit 5 bis 21 C-Atomen steht, vorzugsweise für Alkylreste mit 5 bis 17 und insbesondere Alkylreste mit 11 bis 17 C-Atomen. Besonders geeignete Alkohole in derartigen Estern basieren auf verzweigten oder unverzweigten Alkoholen mit 1 bis 8 C-Atomen, z.B. auf Methanol, Isopropanol, Isobutanol, oder 2-Ethylhexanol. Weiterhin bevorzugt sind Alkohole mit 12 bis 18 C-Atomen. Besonders bevorzugte Ester sind gesättigte C12-C14-Fettsäureester bzw. ungesättigte C16-C18-Fettsäuren, jeweils mit Isopropyl-, Isobutyl- oder 2-Ethylhexanol als Alkoholkomponente. Weiterhin geeignet ist das 2-Ethylhyloctanoat. Weitere geeignete Ester sind Essigsäureester, hier besonders Acetate von C8-C18-Fettalkoholen.

Derartige Ölphasen, üblicherweise als Carrierfluids bezeichnet, sind beispielsweise aus älteren Schutzrechten der Anmelderin Cognis bekannt, wobei hier insbesondere auf die europäischen Patentanmeldungen 0 374 671, 0 374,672, 0 382 070, 0 386 638 verwiesen wird. Auch Ölphasen auf Basis linearer Olefine sind dem Fachmann bekannt, hier sei die europäische Offenlegungsschrift 0 765 368 erwähnt.

Auch verzweigte Ester vom Typ (a), wie sie beispielsweise in der WO 99/33932 (Chevron) oder in der EP 0 642 561 (Exxon) offenbart werden, sind geeignete Carrierfluids im erfindungsgemäßen Verfahren, die dort offenbarten Ester sind Teil der Offenbarung der vorliegenden Erfindung. Weiterhin bevorzugt sind Abmischungen derartiger bevorzugter Ester untereinander.

Es ist auch bevorzugt, dass die Ölphase alpha-Olefine oder interne Olefine (IO) oder polyalpha-Olefine (PAO) im Sinne der Komponente (b) enthalten. Die in der erfindungsgemäßen Ölphase vorliegenden IO beziehungsweise IO-Gemische enthalten dann entsprechende Verbindungen mit 12 bis 30 C-Atomen im Molekül, vorzugsweise mit 14 bis 24 C-Atomen und insbesondere mit bis zu 20 C-Atomen im Molekül. Sofern alpha-Olefine als Ölphase enthalten sind, werden vorzugsweise alpha-Olefine auf Basis von Fettsäuren mit 12 bis 18 C-Atomen eingesetzt, wobei insbesondere gesättigte alpha-Olefine bevorzugt sind. Derartige bevorzugte Mischungen sind Gegenstand der EP 0 765 368 A1 der Anmelderin.

Weiterhin können geeignete Bestandteile der Ölphase wasserunlösliche symmetrische oder unsymmetrische Ether (c) aus einwertigen Alkoholen natürlichen oder synthetischen Ursprungs sein, wobei die Alkohole 1 bis 24 C-Atome enthalten können. Derartige Bohrspülsysteme sind Gegenstand der europäischen Anmeldung 0 472 557. Auch wasserlöslcihe Alkohole der Gruppe (d) können bevorzugte Bestandteile der Ölphase im Sinne der vorliegenden technischen Lehre sein. Weiterhin sind Kohlensäurediester (e) gemäß der europäischen Anmeldung Nr. 0 532 570 geeignete Bestandteile der Ölphase. Diese Verbindungen können sowohl die gesamte Ölphase ausmachen als auch Teile davon. Auch Paraffine (f) und/oder Acetale (g) können als Bestandteile der Ölphase eingesetzt werden.

Es sind beliebige Mischungen der Verbindung a) bis g) untereinander möglich. Die Ölphase der erfindungsgemäßen Emulsionen setzt sich vorzugsweise zu mind. 50 Gew.-% aus derartigen bevorzugten Verbindungen (a) bis (g) zusammen, insbesondere sind solche Systeme bevorzugt, bei denen die Ölphase zu 60 bis 80 % und insbesondere zu 100 Gew.-% aus Verbindungen (a) bis (g) oder Mischungen daraus bestehen.

Die Ölphasen selbst weisen dann vorzugsweise Flammpunkte oberhalb 85 °C und vorzugsweise oberhalb 100°C auf. Sie sind insbesondere als Invert-Bohrspülungen vom W/O-Typ ausgebildet und enthalten dabei vorzugsweise die disperse wässrige Phase in Mengen von etwa 5 von wasserbasierten O/W-Emulsionsspülungen die Menge der dispersen Ölphase im Bereich von etwa 1 bis 50 Gew.-% und vorzugsweise von etwa 8 bis 50 Gew.-% liegt. Die geschlossenen Ölphasen derartiger erfindungsgemäßen Spülungen weisen im Temperaturbereich von 0 bis 5°C eine Brookfield(RVT)-Viskosität unterhalb 50 mPas, vorzugsweise nicht über 40 mPas auf. Der pH-Wert der Spülungen ist vorzugsweise auf einen pH-Wert im Bereich von etwa neutral bis mäßig basisch, insbesondere auf den Bereich von etwa 7,5 bis 11 eingestellt, wobei der Einsatz von Kalk als Alkalireserve besonders bevorzugt sein kann.

Wasser ist ebenfalls ein Bestandteil der beschriebenen Bohrspülsysteme. Das Wasser wird vorzugsweise in Mengen von minimal etwa 0,5 Gew.-% in den Invert-Emulsionen vorhanden sein. Es ist aber bevorzugt, dass mindestens 5 bis 10 Gew.-% Wasser enthalten sind. Wasser in Bohrspülsystemen der hier beschriebenen Art enthält zum Ausgleich des osmotischen Gefälles zwischen der Bohrspülung und dem Formationswasser immer Anteile von Elektrolyten, wobei Calcium- und oder Natrium-Salze die bevorzugten Elektrolyte darstellen. Insbesondere CalCl₂ wird häufig verwendet. Aber auch andere Salze aus der Gruppe der Alkali- und/oder Erdalkali-Gruppe sind geeignet, beispielsweise Kaliumacetate und/oder Formiate.

Vorzugsweise werden die Tensidmischungen im Sinne der Erfindung als Emulgatoren in solchen Spülungssystemen eingesetzt, die, bezogen auf die gesamte Flüssigphase, 10 bis 30 Gew.-% Wasser und somit 90 bis 70 Gew.-% der Ölphase enthalten. Wegen des hohen Anteils an dispergierten Feststoffen in Invert-Bohrspülungen, wird hier nicht Bezug genommen auf das Gesamtgewicht der Spülung, also Wasser- Öl und Feststoffphase. Die Tensidmischungen sind öllöslich und befinden sich daher ganz überwiegend in der Ölphase und deren Grenzflächen zur Wasserphase.

Weitere bevorzugte Mischungsverhältnisse liegen bei 80 Gew.-% Ölphase und 20 Gew.-% Wasserphase. Die Bohrspülungen im Sinne der vorliegende technischen Lehre können noch weitere, übliche Hilfs- und Zusatzstoffe enthalten. Hier kommen insbesondere weitere Emulgatoren, Beschwerungsmittel, fluid-loss-Additive, Viskositätsbildner und Alkalireserven, insbesondere lime (= Ca(OH)₂) aber auch Biozide oder sogenannte wetting agents, welche die Benetzbarkeit von Oberflächen verbessern, in Betracht.

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Emulgatoren der hier betroffenen Art werden im Handel als hoch- konzentrierte Wirkstoffaufbereitungen vertrieben und können beispielsweise in Mengen von etwa 2,5 bis 5 Gew.-%, insbesondere in Mengen von etwa 3 bis 4 Gew.-% - jeweils bezogen auf Ölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von etwa 5 bis 20 und vorzugsweise 5 bis 10 lb/bbl oder besonders bevorzugt im Bereich von etwa 5 bis 8 Gew.-% - bezogen auf die Ölphase.

In Bohrspülungen der hier betroffenen Art ist der üblicherweise eingesetzte Viskositätsbildner ein kationisch modifizierter feinteiliger Bentonit, der insbesondere in Mengen von etwa 8 bis 10 und vorzugsweise von 2 bis 5 lb/bbl oder im Bereich von 1 bis 4 Gew.-%, bezogen auf Ölphase, verwendet werden kann. Das in der einschlägigen Praxis üblicherweise eingesetzte Beschwerungsmittel zur Einstellung des erforderlichen Druckausgleiches ist Baryt (BaSO₄), dessen Zusatzmengen den jeweils zu erwartenden Bedingungen der Bohrung angepasst wird. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen. Ein anderes geeignetes Beschwerungsmittel ist Calciumcarbonat.

### Beispiele

### Beispiel 1

Zum Test der vorliegenden technischen Lehre wurden Bohrspülmittel mit der folgenden allgemeinen Zusammensetzung hergestellt:

| | |
|---|---|
| Ölphase¹⁾ | 173 ml |
| Wasser | 77 ml |
| Viskositätsbildner²⁾ | 2 g |
| Emulgator³⁾ | 8 g |
| Fettsäure⁴⁾ | 2g |
| Ca(OH)₂ | 2 g |
| Fluid loss Additive⁵⁾ | 7 g |
| Bariumsulfat | 327 g |
| CaCl₂ * 2 H₂O | 27 g |
| | |
| Öl/Wasser-Verhältnis | 70/30 (v/v) |
| Dichte: | 14 lb/gal (1,7 g/l) |

| | |
|---|---|
| 1) C₁₆-C₁₈-alpha-Olefin, isomerisiert, Fa. Chevron; Dichte bei 20 °C: 0,785 g/cm³, Brookfield(RVT)-Viskosität bei 20 °C 5,5 mPas 2) modifizierter organophiler Bentonit, Geltone II, Fa. Baroid 3) Aminoamid 4) modifizierter Braunkohlestaub, Duratone HT, Fa. Baroid | |

Die Bestandteile wurden in einem Hamilton-Mixer in der folgenden Reihenfolge vermischt: Ölphase, Wasser, Viskositätsbildner, Emulgator, Lime, fluid-loss additiv, Bariumsulfat, dann das Calziumchlorid und optional ein kontaminierendes Mittel (Rev dust). Anschließend wurde das erfindungsgemäßen Additiv (APG Carboxylat Plantapon LGC UP Fa. Cognis, enthält 30 Gew.-% Aktivsubstanz) in Mengen von 9 g sowie eine Fettsäuremischung aus 73%Ölsäure; 8% Linolsäure und 19% ungesättigte Fettsäuren in Mengen von 2 g zugesetzt, und dann die rheologischen Kenndaten Plastische Viskosität (PV), Fließgrenze (Yield point YP) sowie die Gelstärke (Gels 10"/') nach 10 Sekunden und 10 Minuten der Spülungen mit einem Fann-SR12 Rheometer (Fa. Fann) bestimmt. Weiterhin wurde die elektrische Stabilität gemessen.

Anschließend wurde die Bohrspülung einer Testung in einem Roller Oven (Fa. Baroid) bei Temperaturen von 121 °C (250 °F) für 16 h unterzogen. (After Hot Rolling = AHR in der Tabelle bzw. Before Hot Rolling = BHR).

In Tabelle 1 sind die Ergebnisse aufgeführt, wobei eine Invert-Bohrspülung mit (B) und ohne (A) das erfindungsgemäße Additiv und die Fettsäuremischung untersucht wurden. Das Additiv im Sinne der vorliegenden Erfindung wurde in Mengen von 9 g der obigen Rahmenrezeptur zugesetzt, wobei der Gehalt an Standardemulgator gleichzeitig auf 0 g reduziert wurde.

**Tabelle 1:**

| System No.: | | A | | B | |
|---|---|---|---|---|---|
| | | **BHR** | **AHR** | **BHR** | **AHR** |
| Hours rolled/aged | h | | 16 | | 16 |
| Hot roll temp. | °F | | 250 | | 250 |
| Static age temp. | °F | | - | | - |
| 600 rpm | skt | 67 | 66 | 82 | 69 |
| 300 rpm | | 40 | 40 | 49 | 39 |
| 200 rpm | | 31 | 30 | 39 | 30 |
| 100 rpm | | 21 | 21 | 27 | 20 |
| 6 rpm | | 7 | 8 | 9 | 8 |
| 3 rpm | | 6 | 7 | 8 | 7 |
| **PV** | cP | 27 | 26 | 33 | 30 |
| **YP** | lb/100 ft² | 13 | 14 | 16 | 9 |
| **Gels 10"/10'** | lb/100 ft² | 6/7 | 6/7 | 8/11 | 7/8 |
| HTHP total | ml | | 1,8 | | 0,9 |
| HTHP oil | ml | | 1,8 | | 0,9 |
| HTHP Temp. | ° F | | 250 | | 250 |

Man erkennt, dass der Zusatz der erfindungsgemäßen Tensidmischungen zu besseren Filtratwerten und einem geringeren YP nach Alterung der Spülung führt.

### Beispiel 2

Es wurde die Testreihe wie in Beispiel 1 wiederholt, jetzt aber bei eine Temperatur von 300 °F 16 Stunden gealtert. Die Ergebnisse für PV, YP und Gels sind in Tabelle 2 aufgeführt:

**Tabelle 2:**

| System No.: | | A | | B | |
|---|---|---|---|---|---|
| | | **BHR** | **AHR** | **BHR** | **AHR** |
| Hours rolled/aged | h | | 16 | | 16 |
| Hot roll temp. | °F | | 300 | | 300 |
| Static age temp. | °F | | - | | - |
| **PV** | cP | 26 | 27 | 31 | 29 |
| **YP** | lb/100 ft² | 14 | 15 | 9 | 11 |
| **Gels 10"/10'** | lb/100 ft² | 6/8 | 6/7 | 5/8 | 6/7 |

Wieder zeigt sich, dass der YP der erfindungsgemäß additivvierten Spülung kleinere Werte aufweist, als die Vergleichspülung.

### Beispiel 3

In einem weiteren Test wurden die Invertbohrspülungen wie im Beispiel 1 hergestellt und deren rheologischen Eigenschaften, getestet. Allerdings wurde jetzt noch Salzwasser in Mengen von jeweils 35 g zugesetzt, um das Verhalten der Spülung bei Kontamination zu testen. Die Spülung A enthielt 8 g des Standardemulgators, die Spülung B enthielt statt dessen 9 g des erfindungsgemäßen Plantapon LGC UP sowie 2 g der Fettsäuremischung, wie im Beispiel 1. Die Ergebnisse sind in der Tabelle 3 zu finden:

**Tabelle 3:**

| System No.: | | A | | B | |
|---|---|---|---|---|---|
| | | **BHR** | **AHR** | **BHR** | **AHR** |
| Hours rolled/aged | h | | 16 | | 16 |
| Hot roll temp. | °F | | 250 | | 250 |
| Static age temp. | °F | | - | | - |
| **PV** | cP | 34 | 31 | 33 | 32 |
| **YP** | lb/100 ft² | 23 | 18 | 25 | 17 |
| **Gels 10"/10'** | lb/100 ft² | 9/11 | 8/10 | 10/13 | 9/12 |

### Beispiele 4

Es wurden Invertbohrspülungen wie im Beispiel 3 hergestellt und getestet, jetzt aber 45 g RevDust, einer Filterasche, zugesetzt. Die Ergebnisse sind in der Tabelle 4 zu finden:

**Tabelle 4:**

| System No | | A | | B | |
|---|---|---|---|---|---|
| | | **BHR** | **AHR** | **BHR** | **AHR** |
| Hours rolled/aged | h | | 16 | | 16 |
| Hot roll temp. | °F | | 250 | | 250 |
| Static age temp. | °F | | - | | - |
| **PV** | cP | 50 | 52 | 56 | 64 |
| **YP** | lb/100 ft² | 36 | 31 | 50 | 28 |
| **Gels 10"/10'** | lb/100 ft² | 13/32 | 12/20 | 22/33 | 8/14 |

### Beispiel 5

Es wurden Bohrspülungen wie im Beispiel 1 hergestellt, wobei neben einem Standardemulgator noch ein reines APG sowie verschiedenen Mengen der erfindungsgemäßen Tensidmischungen eingesetzt wurden. Die Spülungen waren frei von den Fettsäuremischungen des Beispiels 1.

Das System A enthielt 8 g des Standardemulgators, B 8 g eines Alkyloligoglycosides (APG 600, Fa. Cognis) und die Systeme C bis E 8, 7 bzw. 5 g der erfindungsgemäßen Tensidmischung. Die Ergebnisse der Messungen finden sich in Tabelle 5:

**Tabelle 5:**

| | | **A** | | **B** | | **C** | | **D** | | **E** | |
|---|---|---|---|---|---|---|---|---|---|---|---|
| | | **BHR** | **AHR** | **BHR** | **AHR** | **BHR** | **AHR** | **BHR** | **AHR** | **BHR** | **AHR** |
| Hours rolled/aged | h | | 16 | | 16 | | 16 | | 16 | | 16 |
| Hot roll temp. | °F | | 250 | | 250 | | 250 | | 250 | | 250 |
| Static age temp. | °F | | | | | | | | | | |
| Electrical stab. | V | 320 | 260 | 270 | 360 | 210 | 200 | 200 | 210 | 190 | 290 |
| 600 rpm | skt | 65 | 61 | 55 | 58 | 76 | 77 | 71 | 73 | 73 | 75 |
| 300 rpm | | 39 | 35 | 28 | 30 | 46 | 49 | 41 | 45 | 44 | 46 |
| 200 rpm | | 30 | 26 | 20 | 22 | 36 | 39 | 32 | 35 | 35 | 36 |
| 100 rpm | | 20 | 17 | 11 | 13 | 27 | 29 | 21 | 24 | 26 | 26 |
| 6 rpm | | 6 | 5 | 2 | 3 | 13 | 13 | 9 | 10 | 13 | 12 |
| 3 rpm | | 5 | 4 | 1 | 2 | 10 | 12 | 8 | 9 | 11 | 11 |
| **PV** | cP | 26 | 26 | 27 | 28 | 30 | 28 | 30 | 28 | 29 | 29 |
| **YP** | lb/100 ft² | 13 | 9 | 1 | 2 | 16 | 21 | 11 | 17 | 15 | 17 |
| **Gels 10"/10'** | lb/100 ft² | 6/7 | 4/6 | 2/5 | 3/5 | 10/19 | 11/17 | 11/25 | 11/22 | 10/19 | 10/15 |

| | | | | | | | | | | | |
|---|---|---|---|---|---|---|---|---|---|---|---|
| skt= Skalenteile auf dem Viskosimeter | | | | | | | | | | | |

### Beispiel 6:

Es wurden drei Spülungssysteme wie in Beispiel 1 hergestellt, wobei Mischungen der erfindungsgemäßen Tensidmischung mit freien Fettsäuren wie in Beispiel 1 untersucht wurden. Die menge der erfindungsgemäßen Tesidmischung wurde zwischen 7 g (A), 9 g (B) und 11 g (C) variiert. Die Fettsäuremischung war jeweils in Mengen von 2 g enthalten.

| | | **A** | | **B** | | **C** | |
|---|---|---|---|---|---|---|---|
| | | **BHR** | **AHR** | **BHR** | **AHR** | **BHR** | **AHR** |
| Hours rolled/aged | h | | 16 | | 16 | | 16 |
| Hot roll temp. | °F | | 250 | | 250 | | 250 |
| Static age temp. | °F | | | | | | |
| Electrical stab. | V | 300 | 230 | 340 | 270 | 410 | 300 |
| 600 rpm | skt | 84 | 71 | 82 | 69 | 73 | 70 |
| 300 rpm | | 51 | 41 | 49 | 39 | 44 | 40 |
| 200 rpm | | 41 | 32 | 39 | 30 | 35 | 31 |
| 100 rpm | | 29 | 22 | 27 | 20 | 24 | 21 |
| 6 rpm | | 10 | 8 | 9 | 8 | 7 | 7 |
| 3 rpm | | 9 | 7 | 8 | 7 | 6 | 6 |
| **PV** | cP | 33 | 30 | 33 | 30 | 29 | 30 |
| **YP** | lb/100 ft² | 18 | 11 | 16 | 9 | 15 | 10 |
| **Gels 10"/10'** | lb/100 ft² | 10/13 | 8/9 | 8/11 | 7/8 | 6/9 | 6/9 |
| HTHP total | ml | | 1,6 | | 0,9 | | 0,8 |
| HTHP oil | ml | | 1,6 | | 0,9 | | 0,8 |
| HTHP temp. | °F | | 250 | | 250 | | 250 |

| | | | | | | | |
|---|---|---|---|---|---|---|---|
| skt= Skalenteile auf dem Viskosimeter | | | | | | | |

## Patentansprüche

1. Verwendung von Tensidmischungen, die hergestellt werden, indem man eine wässrige Lösung aus mindestens einem Alkyl- und/oder Alkenyloligoglycosid in Gegenwart von Alkali mit einer omega-Halogencarbonsäure, deren Salz oder Ester umsetzt, in Bohrspülmitteln.

2. Verwendung nach Anspruch 1, **dadurch gekennzeichnet**, die Tensidmischungen hergestellt werden, indem man Alkyl- und Alkenyloligoglykoside der Formel (I) einsetzt,
RO-[G]p (I)
in der R für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht.

3. Verwendung nach den Ansprüchen 1 und/oder 2, **dadurch gekennzeichnet, dass** bei der Herstellung der Tensidmischungen Natriummonochloracetat eingesetzt wird.

4. Verwendung nach den Ansprüche 1 bis 3, **dadurch gekennzeichnet, dass** bei der Herstellung der Tensidmischungen das Alkyl- und/oder Alkenyloligoglycosid mit einer omega-Halogencarbonsäure, deren Salz oder Ester, im Molverhältnis 1 : 0,5 bis 1 : 3,5 umgesetzt wird.

5. Verwendung nach den Ansprüchen 1 bis 4, **dadurch gekennzeichnet, dass** die Tensidmischungen als Emulgatoren in solchen Bohrspülungen eingesetzt werden, die mindestens eine wässerige und ein nicht-wässerige Phase enthalten.

6. Verwendung nach den Ansprüchen 1 bis 5, **dadurch gekennzeichnet, dass** die Tensidmischungen als Emulgatoren in Bohrspülmitteln verwendet werden, die eine Wasser-in-Öl oder eine Öl-in-Wasser Emulsion bilden.

7. Verwendung nach den Ansprüchen 1 bis 6, **dadurch gekennzeichnet, dass** die Tensidmischungen in wässerigen Emulsionsbohrspülsystemen verwendet werden, die als Ölphase Ester aus gesättigten oder ungesättigten, verzweigten oder unverzweigten Monocarbonsäuren mit 1 bis 24 C-Atomen mit einwertigen linearen oder verzweigten, gesättigten oder ungesättigten Alkoholen mit 1 bis 24 C-Atomen enthalten.

8. Verwendung nach den Ansprüchen 1 bis 7, **dadurch gekennzeichnet, dass** die Tensidmischungen in wässerigen Emulsionsbohrspülsystemen verwendet werden, die als Ölphase lineare alpha-Olefine, interne Olefine und/oder Paraffine enthalten.

9. Verwendung der Tensidmischungen gemäß den Ansprüchen 1 bis 8, **dadurch gekennzeichnet, dass** die Tensidmischungen in Mengen von 0,1 bis 25 Gew.-%, vorzugsweise 0,1 bis 10 Gew.-% und insbesondere von 0,1 bis 5 Gew.-%, jeweils bezogen auf das Gewicht der Bohrspülung, eingesetzt werden.

10. Verwendung nach den Ansprüchen 1 bis 9, **dadurch gekennzeichnet, dass** neben den Tensidmischungen noch freie Fettsäuren bzw. deren Mischungen verwendet werden.

11. Verwendung nach Anspruch 10, **dadurch gekennzeichnet, dass** Fettsäuren, die 6 bis 22 C-Atome enthalten, verwendet werden.

12. Bohrlochbehandlungsmittel, welches im Temperaturbereich von 5 bis 20°C fließ- und pumpfähig ist, auf Basis einer geschlossenen Ölphase in Abmischung mit einer beschränkten Menge einer dispersen wässrigen Phase (W/O-Invert-Typ), enthaltend optional gelöste und/oder dispergierte übliche Hilfsstoffe wie Viskositätsbildner, Fluid-loss-Additive, Netzmittel, feinteilige Beschwerungsstoffe, Salze, Alkalireserven und/oder Biozide, **dadurch gekennzeichnet, dass** das Mittel als Emulgatoren Tensidmischungen enthält, die hergestellt werden, indem man eine wässrige Lösung aus mind. einem Alkyl- und/oder Alkyloligoglycosid in Gegenwart von Alkali mit einer Omega-Halogencarbonsäure, deren Salz oder Ester umsetzt.

13. Bohrlochbehandlungsmittel nach Anspruch 12, **dadurch gekennzeichnet, dass** die Ölphase ausgewählt ist aus den Klassen
(a) Carbonsäureestern der Formel (II)
R'-COO-R" (II)
wobei R' für einen gesättigten oder ungesättigten, linearen oder verzweigten Alkylrest mit 5 bis 23 C-Atomen steht und R" einen Alkylrest mit 1 bis 22 C-Atomen bedeutet, wobei der Rest R" gesättigt oder ungesättigt, linear oder verzweigt sein kann,
(b) linearen oder verzweigte Olefinen mit 8 bis 30 C-Atomen,
(c) wasserunlöslichen symmetrischen oder unsymmetrischen Ether aus einwertigen Alkoholen natürlichen oder synthetischen Ursprungs, wobei die Alkohole 1 bis 24 C-Atome enthalten können,
(d) wasserunlöslichen Alkohole der Formel (III)
R"'-OH (III)
wobei R"' für einen gesättigten, ungesättigten, linearen oder verzweigten Alkylrest mit 8 bis 24 C-Atomen steht,
(e) Kohlensäurediestern
(f) Paraffine,
(g) Acetale

## Claims

1. Use of surfactant mixtures, which are prepared by reacting an aqueous solution of at least one alkyl and/or alkenyl oligoglycoside with an omega-halocarboxylic acid or salt or ester thereof in the presence of alkali, in drilling fluids.

2. Use according to claim 1, **characterized in that** the surfactant mixtures are prepared by employing alkyl and alkenyl oligoglycosides having the formula (I)
RO-[G]p (I)
in which R represents an alkyl and/or alkenyl radical having 4 to 22 carbon atoms, G represents a sugar radical having 5 or 6 carbon atoms and p represents numbers from 1 to 10.

3. Use according to claims 1 and/or 2, **characterized in that** sodium monochloroacetate is employed in the preparation of the surfactant mixtures.

4. Use according to claims 1 to 3, **characterized in that** in the preparation of the surfactant mixtures, the alkyl and/or alkenyl oligoglycoside is reacted with an omega-halocarboxylic acid or salt or ester thereof in a molar ratio of 1 : 0.5 to 1 : 3.5.

5. Use according to claims 1 to 4, **characterized in that** the surfactant mixtures are employed as emulsifiers in those drilling fluids which comprise at least one aqueous and one non-aqueous phase.

6. Use according to claims 1 to 5, **characterized in that** the surfactant mixtures are used as emulsifiers in drilling fluids which form a water-in-oil or an oil-in-water emulsion.

7. Use according to claim 1 to 6, **characterized in that** the surfactant mixtures are used in aqueous emulsion drilling fluid systems which comprise as the oily phase esters of saturated or unsaturated, branched or unbranched monocarboxylic acids having 1 to 24 C atoms with monohydric linear or branched, saturated or unsaturated alcohols having 1 to 24 C atoms.

8. Use according to claims 1 to 7, **characterized in that** the surfactant mixtures are employed in aqueous emulsion drilling fluid systems which comprise as the oily phase linear alpha-olefins, internal olefins and/or paraffins.

9. Use of the surfactant mixtures according to claims 1 to 8, **characterized in that** the surfactant mixtures are employed in amounts of from 0.1 to 25 wt.%, preferably 0.1 to 10 wt.% and in particular from 0.1 to 5 wt.%, in each case based on the weight of the drilling fluid.

10. Use according to claims 1 to 9, **characterized in that** in addition to the surfactant mixtures, free fatty acids or mixtures thereof are also used.

11. Use according to claim 10, **characterized in that** fatty acids which contain 6 to 22 C atoms are used.

12. Drill-hole treatment composition which is flowable and pumpable in the temperature range of from 5 to 20 °C and is based on a closed oily phase mixed with a limited amount of a disperse aqueous phase (W/O invert type), containing optionally dissolved and/or dispersed conventional auxiliaries, such as viscosity builders, fluid loss additives, wetting agents, finely divided ballast substances, salts, alkali reserves and/or biocides, **characterized in that** the composition comprises as emulsifiers surfactant mixtures which are prepared by reacting an aqueous solution of at least one alkyl and/or alkenyl oligoglycoside with an omega-halocarboxylic acid or salt or ester thereof in the presence of alkali.

13. Drill-hole treatment composition according to claim 12, **characterized in that** the oily phase is chosen from the classes
(a) carboxylic acid esters of the formula (II)
R'-COO-R" (II)
wherein R' represents a saturated or unsaturated, linear or branched alkyl radical having 5 to 23 C atoms and R" denotes an alkyl radical having 1 to 22 C atoms, wherein the radical R" can be saturated or unsaturated, linear or branched,
(b) linear or branched olefins having 8 to 30 C atoms,
(c) water-insoluble symmetric or unsymmetric ethers of monohydric alcohols of natural or synthetic origin, wherein the alcohols can contain 1 to 24 C atoms,
(d) water-insoluble alcohols of the formula (III)
R"'-OH (III)
wherein R"' represents a saturated, unsaturated, linear or branched alkyl radical having 8 to 24 C atoms,
(e) carbonic acid diesters,
(f) paraffins,
(g) acetals.

## Revendications

1. Utilisation de mélanges tensioactifs que l'on prépare en transformant une solution aqueuse d'au moins un oligoglycoside d'alkyle et/ou d'alcényle en présence d'alcali avec un acide carboxylique oméga-halogéné, son sel ou son ester, dans des fluides de forage.

2. Utilisation selon la revendication 1, **caractérisée en ce qu'**on prépare les mélanges tensioactifs en utilisant des oligoglycosides d'alkyle et d'alcényle ayant la formule (I)
RO-[G]ₚ (I)
dans laquelle R représente une radical alkyle et/ou alcényle comportant de 4 à 22 atomes de carbone, G un groupement sucre comportant 5 ou 6 atomes de carbone et p des nombres de 1 à 10.

3. Utilisation selon les revendications 1 et/ou 2, **caractérisée en ce qu'**on utilise du monochloroacétate de sodium pour préparer les mélanges tensioactifs.

4. Utilisation selon les revendications 1 à 3, **caractérisée en ce que** l'on met l'oligoglycoside d'alkyle et/ou d'alcényle avec un acide carboxylique oméga-halogéné, son sel ou son ester, dans un rapport molaire de 1:0,5 à 1:3,5, pour préparer les mélanges tensioactifs.

5. Utilisation selon les revendications 1 à 4, **caractérisée en ce qu'**on utilise les mélanges tensioactifs comme émulsifiants dans les fluides de forage contenant au moins une phase aqueuse et une phase non aqueuse.

6. Utilisation selon les revendications 1 à 5, **caractérisée en ce qu'**on utilise les mélanges tensioactifs comme émulsifiants dans des fluides de forage formant une émulsion eau dans huile ou huile dans eau.

7. Utilisation selon les revendications 1 à 6, **caractérisée en ce qu'**on utilise les mélanges tensioactifs dans des systèmes fluides de forage en émulsion aqueuse contenant, comme phase huileuse, des esters d'acides monocarboxyliques saturés ou insaturés, ramifiés ou non ramifiés, comportant de 1 à 24 atomes de C avec des alcools monovalents linéaires ou ramifiés, saturés ou non saturés, comportant de 1 à 24 atomes de C.

8. Utilisation selon les revendications 1 à 7, **caractérisée en ce qu'**on utilise les mélanges tensioactifs dans des systèmes fluides de forage en émulsion aqueuse contenant, comme phase huileuse, des alpha-oléfines linéaires, des oléfines internes et/ou des paraffines.

9. Utilisation des mélanges tensioactifs selon les revendications 1 à 8, **caractérisée en ce qu'**on utilise les mélanges tensioactifs dans des quantités de 0,1 à 25 % en poids, de préférence de 0,1 à 10 % en poids et, en particulier, de 0,1 à 5 % en poids, respectivement par rapport au poids de fluide de forage.

10. Utilisation selon les revendications 1 à 9, **caractérisée en ce qu'**on utilise outre les mélanges tensioactifs, encore des acides gras libres ou leurs mélanges.

11. Utilisation selon la revendication 10, **caractérisée en ce qu'**on utilise des acides gras contenant de 6 à 22 atomes de C.

12. Produit de traitement pour puits de forage fluide et pouvant être pompé dans la plage de température de 5 à 20°C, à base d'une phase huileuse fermée dans un mélange avec une quantité limitée d'une phase aqueuse disperse (type inverse E/H), contenant en option des excipients usuels dissous et/ou dispersés, tels que des agents de viscosité, des additifs réducteurs de perte de fluide, des agents mouillants, des charges finement texturées, des sels, des réserves alcalines et/ou des biocides, **caractérisé en ce que** le produit contient, comme émulsifiants, des mélanges tensioactifs que l'on prépare en transformant une solution aqueuse d'au moins un oligoglycoside d'alkyle et/ou d'alcényle en présence d'alcali avec un acide carboxylique oméga-halogéné, son sel ou son ester.

13. Produit de traitement pour puits de forage selon la revendication 12, **caractérisé en ce que** la phase huileuse est choisie dans les classes :
(a) Esters d'acides carboxyliques ayant la formule (II)
R'-COO-R" (II)
dans laquelle R' représente un radical alkyle saturé ou insaturé, linéaire ou ramifié, comportant de 5 à 23 atomes de C et R" un radical alkyle comportant de 1 à 22 atomes de C, le radical R" pouvant être saturé ou insaturé, linéaire ou ramifié,
(b) Oléfines linéaires ou ramifiées comportant de 8 à 30 atomes de C,
(c) Ethers symétriques ou asymétriques insolubles dans l'eau provenant d'alcools monovalents d'origine naturelle ou synthétique, les alcools pouvant contenir de 1 à 24 atomes de C,
(d) Alcools insolubles dans l'eau ayant la formule (III)
R"'-OH (III)
R"' représentant un radical alkyle saturé, insaturé, linéaire ou ramifié, comportant de 8 à 24 atomes de C,
(e) Diesters d'acide carbonique
(f) Paraffines
(g) Acétals.
